# EUROPEAN PATENT APPLICATION

(11) **EP 2 072 294 A1**
(43) Date of publication of application: **24.06.2009**
(21) Application number: 07123491.8
(22) Date of filing: 18.12.2007
(51) Int. Cl.: B60G 17/019, G01G 19/08

(54) **Method and system for detecting the load of a vehicle equipped with non-pneumatic suspensions**

(71) Applicant: IVECO S.p.A., 10156 Torino (IT)
(72) Inventor: Bertozzi, Franco, 10040 Druento (IT)
(74) Representative: Borsano, Corrado

(57) **Abstract**

Method for detecting the load of a vehicle, in particular an industrial vehicle, provided with non-adjustable suspensions, such as elastic spring suspensions, like the leaf springs, used for the measurement of the deformation of at least some of said suspensions. It is possible to determine the load on each axle and/or the overall load weighing on the vehicle.

## Description

### FIELD OF THE INVENTION

This invention relates to a method and system for detecting the load acting on the axles of a vehicle, in particular an industrial vehicle, and a vehicle equipped with said system.

### DESCRIPTION OF THE PRIOR ART

In the industrial vehicle field it is important to know the overall load of the vehicle and, often, also the load weighing on each axle. This is to comply with the limits imposed by the law and to safely use the vehicle. It is often difficult, however, to obtain this information. It may be necessary, for example, to weight the vehicle several times during the loading operations, in order to make maximum use of its capacity, without exceeding the limits. Therefore it is necessary to have a weighing machine and the loading operations are excessively time-consuming. Moreover, the weighing machine will give information about the overall load, but not about the load per axle and about the load distribution inside the vehicle.

Some industrial vehicles, especially road vehicles, are equipped with pneumatic suspensions. These suspensions allow to bring the height of the chassis to a predetermined value on its different axles, regardless of the load, thanks to the possibility to introduce (or to remove) compressed air taken from a appropriate circuit. In case of articulated trucks, if the pneumatic suspensions are available on the rear axle of the tractor, they may be used to lower the tractor during the hooking or the unhooking of the semi-trailer, and then to bring it back to the travelling position. On some of these vehicles there is a system for detecting the load weighing on the axles, comprising pressure sensors which measure the pressure of the air in each suspension. The data detected by the various sensors, after being processed, for example, by an on-board electronic control unit according to predetermined methods, allow to know the load weighing on each axle with a considerable precision (in the order of hundreds of kilograms). A appropriate display may give this information to the driver, so that the weighing of the vehicle becomes unnecessary, and the loading operations are much faster.

Most of the vehicles for which it would be useful to know the information about the load weighing on each axle, or at least the overall load, however, are not equipped with pneumatic suspensions, or not all their axles are equipped with pneumatic suspensions. Therefore for these vehicles it is impossible to estimate the load, or the estimation of the load may be based only on partial data, making it not reliable enough, especially in case of partial or unbalanced load. The vehicles which are usually not equipped with pneumatic suspensions are, for example, those which are not intended to run on the road, such as machine vehicles and construction vehicles, semi-trailers, even if the tractor may be equipped with pneumatic suspensions, at least on the rear axle.

### SUMMARY OF THE INVENTION

The problems mentioned above have been solved according to this invention by a method for detecting the load of a vehicle, in particular an industrial vehicle, provided with suspensions, comprising the measurement of the deformation of at least some of said suspensions under the action of the load.

The deformation may be measured by measuring the height of the chassis with respect to one or more axles of the vehicle, preferably in correspondence of said suspensions. The suspensions may be common elastic suspensions, for example comprising springs, such as leaf springs. Generally these suspensions are not adjustable, that is they cannot be adjusted after every loading or unloading operation in order to bring the vehicle to a predetermined height, which distinguishes them from the pneumatic suspensions described above which are adjustable. According to a preferred embodiment, the method comprises the measurement of the height of the vehicle chassis in two points on at least one axle, preferably inn correspondence of the suspensions of said axle.

With this measurement both the overall load of the vehicle and the load of one or more axles may be calculated.

The invention relates also to a system for detecting the load of a vehicle provided with suspensions comprising at least a sensor suitable for detecting the deformation of at least one of said suspensions and a vehicle provided with said system.

This invention refers in particular to what mentioned in the claims attached hereto.

### LIST OF THE FIGURES

This invention will be explained by means of a detailed description of a preferred, but non-exclusive, embodiments shown with the help of the drawings that are attached hereto, which are merely illustrative and not-limitative, in which:
figure 1 represents the diagram of a detail of a system according to the invention, comprising a sensor;
figure 2 represents a more general diagram of a system according to the invention.

### DETAILED DESCRIPTION OF AN EMBODIMENT OF THE INVENTION

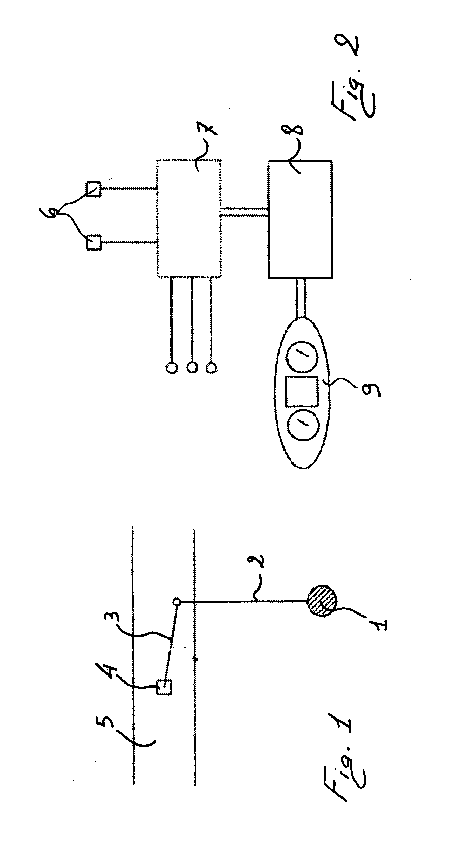

Figure 1 represents the diagram of a sensor used in the method according to this invention. The sensor may be of any of the appropriate known type, for example a Hall effect rotation sensor. Other appropriate sensors are rack sensors and optical sensors, but there are not any restrictions on the type of sensor. Level sensors are traditionally used with the adjustable pneumatic suspensions described above, but only with the purpose of allowing the chassis height to reach a predetermined value. The described sensor has an adjustable bar 2, which is fixed with respect to an axle 1 of the vehicle. This bar is hinged to an extremity of the bar 3, whose other extremity is free to rotate and is comprised in the measurement cell 4, integral with the chassis, for example with the side member 5. The rotation of the bar 3 is detected by the cell 4 and depends on the height of the chassis on the axle. The height of the chassis depends in its turn on the deformation of the suspension which depends on the load weighing on the axle.

According to a preferred embodiment of the invention, the sensor is appropriately placed in correspondence of the suspension. Preferably there are two sensors per axle, one sensor for each suspension, more preferably all the axles are equipped this way. The data detected by the sensor may be used for the calculation of the load weighing on each axle, by means of an appropriate mathematical logic. The overall load is, obviously, the sum of all the loads. It is also possible that only some of the axles are provided with the sensors, if needed. If the pneumatic suspensions are present on some of the axles, it is possible to apply the method according to the present invention. In this case the pneumatic suspensions may be provided with pressure sensors for detecting the load, as in the prior art described above, while on the axles which are not equipped with pneumatic suspensions or whose suspensions are not adjusted, the detection of the load may be carried out with the method described in this invention.

With reference to figure 2, the data detected by the sensors 6 (the sensors shown in figure are only two and refer to one axle, but the diagram is applied to all the sensors) are collected by a control unit 7 which may process and send them to an on-board computer, which may control the showing of the processed data on a display on the dashboard 9 of the vehicle, or anyway make them available to the driver in an appropriate way. It should be noted that the on-board computer and the control unit may be integrated in a single electronic unit and the scheme of the electronic system may be adequately modified.

Applying the method described above, it has been measured that, in case of traditional leaf spring suspensions, the determination of the load per axle has a resolution of 500 kg. For the most common applications a resolution of 1 ton is sufficient.

The method and system according to this invention allow to quickly know the information about the load on vehicles which are not equipped with adjustable suspensions, when the deformation of the suspension depends on the load. It is particularly advantageous in case of construction vehicles, machine vehicles, but also road vehicles. It may also be applied on the axles of a semi-trailer; in this case it will be necessary to provide the vehicle with a connection suitable for transmitting the data of the whole vehicle to the tractor, for example by means of a data transmission bus. The system may be calibrated in an appropriate way, in order to know the overall weight, which includes the weight of the empty vehicle, or the weight of the carried load. This and other ways of managing the obtainable data may be developed according to the needs of the person skilled in the art.

The invention relates also to a computer program, suitable for running on a control unit or on an on-board computer as described above, with the function to calculate the load of a vehicle or the load weighing on one or more axles of a vehicle, on the basis of the data on the deformation of the suspensions of said vehicle.

## Claims

1. Method for detecting the load of a vehicle, in particular an industrial vehicle, provided with suspensions, comprising the measurement of the deformation of at least some of said suspensions.

2. Method according to claim 1, wherein the measurement comprises the measurement of the height of the chassis with respect to the axle (1) upon which each of said suspension operates.

3. Method according to claim 1 or 2, wherein said measurement is carried out at two points for each axle, in correspondence of the two suspensions operating on the axle.

4. Method according to any of the previous claims, wherein the measurement is carried out by means of appropriate sensors (6) and the data detected by said sensors are processed by a appropriate electronic unit (7, 8).

5. Method according to any of the previous claims, wherein the load weighing on one or more axles is detected.

6. Method according to any of the previous claims, wherein the overall load of the vehicle is detected.

7. System for detecting the load of a vehicle, in particular an industrial vehicle, provided with suspensions, comprising sensors (6) suitable for measuring the height of the chassis on at least part of said axles (1).

8. System according to claim 7, comprising two sensors for each axle considered.

9. System according to claim 7 or 8, comprising a control unit (7, 8) having the function to process the data collected by said sensor.

10. Computer program suitable for calculating the load of a vehicle or the load weighing on one or more axles of a vehicle, on the basis of the data on the deformation of the suspensions of said vehicle.

11. Vehicle, in particular industrial vehicle, provided with a system according to any claim from 7 to 9.
